# EUROPÄISCHE PATENTSCHRIFT

(11) **EP 3 652 567 B1**
(45) Veröffentlichungstag und Bekanntmachung des Hinweises auf die Patenterteilung: **25.09.2024**
(21) Anmeldenummer: 18729099.4
(22) Anmeldetag: 04.06.2018
(51) Int. Cl.: G01V 3/08, G01B 7/00, G01V 3/165, G01V 13/00

(54) **VERFAHREN ZUR ORTUNG UND ORTUNGSVORRICHTUNG**
METHOD FOR LOCATING, AND LOCATING DEVICE
PROCÉDÉ DE LOCALISATION ET DISPOSITIF DE LOCALISATION

(30) Priorität: 14.07.2017 DE 102017212094
(43) Veröffentlichungstag der Anmeldung: 20.05.2020
(73) Patentinhaber: Robert Bosch GmbH, 70442 Stuttgart (DE)
(72) Erfinder: ZIBOLD, Tobias, 70567 Stuttgart (DE); HUEMBERT, Frank, 70597 Stuttgart (DE); ALBRECHT, Andrej, 70771 Leinfelden-Echterdingen (DE)
(86) Internationale Anmeldenummer: PCT/EP2018/064567
(87) Internationale Veröffentlichungsnummer: WO 2019/011526

(56) Entgegenhaltungen:
- US-A- 5 619 128
- US-A1- 2005 242 800
- US-A1- 2011 239 794

## Beschreibung

Die Erfindung betrifft ein Verfahren zur Ortung eines unter einer Untersuchungsoberfläche verborgenen Ortungsobjekts mittels einer Ortungsvorrichtung. Die vorliegende Erfindung betrifft ferner eine zur Durchführung des Verfahrens eingerichtete Ortungsvorrichtung.

### Stand der Technik

Es sind bereits Verfahren zur Ortung von Ortungsobjekten vorgeschlagen worden, beispielsweise in DE 10 2013 221 495 A1. Ferner sind Kalibrierverfahren für Ortungsvorrichtungen aus dem Stand der Technik bekannt, beispielsweise aus US 2005/242800 A1, US 2011/239794 A1 oder US 5 619 128 A.

Aus dem Stand der Technik bekannte Ortungsvorrichtungen, insbesondere Ortungsvorrichtungen zum Finden von Balken in Leichtbauwänden (sogenannte "Studfinder"), basieren typischerweise auf kapazitiven Messverfahren. Dabei wird eine Kapazität auf einer Untersuchungsoberfläche gemessen, während die Ortungsvorrichtung typischerweise über die Untersuchungsoberfläche bewegt wird. Steigt die Kapazität um einen Mindestwert an (beispielsweise einen Schwellwert übersteigend), so wird ein Ortungsobjekt detektiert und mittels einer Ausgabevorrichtung der Ortungsvorrichtung angezeigt und so an einen Benutzer der Ortungsvorrichtung ausgegeben. Einfache Ortungsvorrichtungen des Stands der Technik weisen ein Empfangsmittel auf, während auch aufwändigere Ortungsvorrichtungen Anwendung finden, die zwei oder mehr Empfangsmittel aufweisen.

### Offenbarung der Erfindung

Die Erfindung geht aus von einem Verfahren zur Ortung eines unter einer Untersuchungsoberfläche verborgenen Ortungsobjekts mittels einer Ortungsvorrichtung, wobei zumindest ein von dem Ortungsobjekt abhängiges Koppelsignal mit einem Empfangsmittel der Ortungsvorrichtung empfangen wird.

Unter einer "Ortungsvorrichtung" soll insbesondere eine Vorrichtung verstanden werden, die zu einer Ermittlung einer Ortungsinformation eines in einem Werkstück verdeckt angeordneten Ortungsobjekts vorgesehen ist. Dabei soll unter der Ortungsvorrichtung insbesondere eine Vorrichtung verstanden werden, die Mittel aufweist, die dazu vorgesehen sind, physikalische und/oder chemische Größen, die auf ein Vorhandensein eines Ortungsobjekts schließen lassen, zu erfassen und in ein elektrisch auswertbares Signal umzuwandeln. Insbesondere schließt die Detektionsvorrichtung zum Betrieb der Mittel notwendige Komponenten, elektrische Schaltungen und dergleichen ein. Die Ortungsvorrichtung ist dazu vorgesehen, ein in einer Wand angeordnetes Ortungsobjekt, beispielsweise eine Stromleitung, an der eine Netzspannung anliegt, oder einen Holzträger oder dergleichen, zu orten. Beispielhaft kann die Ortungsvorrichtung handgehalten sein. Unter einer "handgehaltenen" Ortungsvorrichtung soll insbesondere verstanden werden, dass die Ortungsvorrichtung ohne Zuhilfenahme einer Transportmaschine lediglich mit den Händen, insbesondere mit einer Hand, transportiert werden kann. Insbesondere kann die Ortungsvorrichtung auch während eines Messvorgangs in einer von einem Benutzer der Ortungsvorrichtung frei ausgeführten Bewegung, insbesondere einer eindimensionalen oder zweidimensionalen freien Bewegung, relativ zur Untersuchungsoberfläche bewegt werden und derart über die Untersuchungsoberfläche geführt werden.

Die Masse der handgehaltenen Ortungsvorrichtung beträgt insbesondere weniger als 5 kg, vorteilhaft weniger als 3 kg und besonders vorteilhaft weniger als 1 kg. Vorzugsweise weist die handgehaltene Ortungsvorrichtung ein Gehäuse mit einem Griff oder einem Griffbereich auf, mit dem die Ortungsvorrichtung über die Untersuchungsoberfläche des zu untersuchenden Gegenstands geführt werden kann.

Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Unter einer "Untersuchungsoberfläche" ist insbesondere eine Oberfläche eines hinsichtlich verborgener Ortungsobjekte zu untersuchenden Gegenstands oder Werkstücks zu verstehen. Insbesondere stellt ein Gegenstand ein Werkstück dar. Der Begriff "Werkstück" meint in diesem Sinne alle mittels der Ortungsvorrichtung untersuchbaren Gegenstände oder Materialien. Beispielsweise und nicht abschließend kann es sich bei dem Werkstück um Baustoffe, eine Wand, einen Boden, eine Decke, Estrich, ein organisches Gebilde und/oder Teile eines Geländes handeln. Bestehen kann der Gegenstand oder das Werkstück beispielsweise insbesondere aus Holz, Glas, Kunststoff, Beton, Stein, Ziegel, Gips, Metall, organischen Materialien oder dergleichen. Des Weiteren lassen sich prinzipiell auch Flüssigkeiten untersuchen.

Unter einem "Empfangsmittel" soll ein Mittel verstanden werden, das dazu vorgesehen ist, eine Leistung induktiv und/oder kapazitiv von dem Ortungsobjekt zu empfangen. In einer Ausführungsform der Ortungsvorrichtung ist das Empfangsmittel als eine elektrisch leitende Fläche ausgebildet. In einer Ausführungsform ist das Empfangsmittel als flächige Elektrode ausgeführt, die in einer Ebene liegt, die bei der Durchführung des erfindungsgemäßen Verfahrens zur Ortung im Wesentlichen parallel zur Untersuchungsoberfläche ausgerichtet ist. In einer Ausführungsform weist die Ortungsvorrichtung zwei Empfangsmittel auf: ein erstes Empfangsmittel, das dazu vorgesehen ist, ein erstes Koppelsignal von dem Ortungsobjekt zu empfangen, und ein zweites Empfangsmittel, das dazu vorgesehen ist, ein zweites Koppelsignal von dem Ortungsobjekt zu empfangen. In einer alternativen Ausführungsform weist die Ortungsvorrichtung mehr als zwei Empfangsmittel, insbesondere vier oder sechs oder acht Empfangsmittel, auf. In einer alternativen Ausführungsform könnte die Ortungsvorrichtung auch deutlich mehr, vorzugsweise in einer geraden Anzahl vorliegende, Empfangsmittel aufweisen. In einer Ausführungsform weist die Ortungsvorrichtung weitere, dem Fachmann als sinnvoll erscheinende Sendemittel und/oder Empfangsmittel zur induktiven, kapazitiven und/oder hochfrequenten Ortung von spannungsführenden und/oder spannungsfreien Ortungsobjekten auf.

In einer Ausführungsform ist die Ortungsvorrichtung als eine Wechselspannungsortungsvorrichtung und/oder als eine kapazitive Ortungsvorrichtung realisiert. Insbesondere sind die beiden Empfangsmittel als flächige Elektroden ausgeführt. In einer Ausführungsform liegen die als flächige Elektroden ausgeführten Empfangsmittel in einer gemeinsamen Ebene, die bei der Durchführung des erfindungsgemäßen Verfahrens zur Ortung im Wesentlichen parallel zur Untersuchungsoberfläche ausgerichtet ist. In einer Ausführungsform definieren die beiden, insbesondere als flächige Elektroden ausgeführten, Empfangsmittel eine Achse.

Die Ortungsvorrichtung weist ferner eine Steuervorrichtung zur Ansteuerung der funktionalen Komponenten der Ortungsvorrichtung auf, insbesondere zur Ansteuerung und zum Betrieb zumindest einer Eingabe- und/oder einer Ausgabevorrichtung, einer Datenkommunikationsschnittstelle, einer Speichervorrichtung, der Messelektronik, insbesondere des Empfangsmittels, sowie weiterer, dem Fachmann als sinnvoll erscheinender Komponenten. Die Steuervorrichtung ist dazu vorgesehen, den Betrieb der Ortungsvorrichtung zu steuern sowie empfangene Koppelsignale zu verarbeiten, insbesondere auszuwerten. Insbesondere ist die Steuervorrichtung dazu vorgesehen, das erfindungsgemäße Verfahren zur Ortung (wie folgt beschrieben) durchzuführen.

Eine Energieversorgungsvorrichtung der Ortungsvorrichtung ist dazu vorgesehen, die Ortungsvorrichtung zur Inbetriebnahme und während des Betriebs mit elektrischer Energie zu versorgen. In einer Ausführungsform handelt es sich bei der Energieversorgungsvorrichtung um einen stromnetzunabhängigen Energiespeicher, beispielsweise eine Batterie.

Unter einem "Koppelsignal" soll insbesondere ein Signal verstanden werden, das durch eine induktive und/oder kapazitive Kopplung von dem verdeckt angeordneten Ortungsobjekt durch das zu untersuchende Werkstück auf die Ortungsvorrichtung übertragen wird. Insbesondere handelt es sich bei dem Koppelsignal um ein mittels des Empfangsmittels in ein elektrisches Signal umwandelbares Signal. Das elektrische Signal, welches das Koppelsignal in elektronischer Form repräsentiert, wird im Folgenden ebenfalls als "Koppelsignal" bezeichnet. Dabei kann das elektrische Signal beispielsweise in Form einer Spannung und/oder eines Stroms vorliegen, vorzugsweise in Form einer Kapazität. Ferner wird das elektrische Signal von dem Empfangsmittel erzeugt und an die Steuervorrichtung der Ortungsvorrichtung ausgegeben. Unter dem Begriff "empfangen" soll insbesondere verstanden werden, dass das Empfangsmittel das drahtlos übertragene Koppelsignal (elektromagnetisches Signal) in ein elektrisches, insbesondere drahtgebunden übertragenes, Koppelsignal wandelt. In einer Ausführungsform der Ortungsvorrichtung als kapazitive Ortungsvorrichtung kann eine kapazitive Kopplung, insbesondere die Kapazität eines jeweiligen Empfangsmittels, berechnet werden. Die berechneten Werte C der Kapazität stellen in dieser Ausführungsform die Koppelsignale dar.

Unter einem "Ortungsobjekt" soll insbesondere ein in und/oder hinter dem Werkstück verdeckt angeordnetes, mit der Ortungsvorrichtung ortbares Objekt verstanden werden. Beispielsweise kann das Ortungsobjekt als eine Wechselstromleitung oder als ein Holzträger oder als ein Metallgegenstand oder dergleichen ausgebildet sein.

Bei Ortungsvorrichtungen des Stands der Technik wird typischerweise nach dem Aufsetzen der Ortungsvorrichtung auf eine Untersuchungsoberfläche zunächst ein Hintergrundabzug durchgeführt. Der Hintergrund (auch "Hintergrundsignal" oder "Background") bezeichnet dabei dasjenige Koppelsignal, welches in Abwesenheit eines Ortungsobjekts auf der Untersuchungsoberfläche ermittelt wird. Somit entspricht der Hintergrund im Wesentlichen dem Koppelsignal, wie es in Abwesenheit eines Ortungsobjekts lediglich von der Untersuchungsoberfläche bewirkt wird. Ein Hintergrundabzug - d.h. die Subtraktion des ermittelten Hintergrunds (insbesondere eines Wertes C_{BG} des Hintergrunds) von einem gemessenen Koppelsignal - ist typischerweise vorgesehen, da durch unterschiedliche Permittivitäten verschiedener Materialien (Ortungsobjekte, Untersuchungsoberflächen) gemessene Koppelsignale deutlich variieren können, wobei eine Veränderung des Koppelsignals durch ein zu detektierendes Ortungsobjekt in/hinter einer Untersuchungsoberfläche verhältnismäßig klein ist gegenüber dem Hintergrund. Durch den Hintergrundabzug wird diese geringe Veränderung erst deutlich, insbesondere detektierbar.

Prinzipiell kann es bei Verwendung einer Ortungsvorrichtungen vorkommen, dass die Ortungsvorrichtung bei Aufsetzen auf die Untersuchungsoberfläche unmittelbar an der Stelle der Untersuchungsoberfläche platziert wird, unter der sich ein zu detektierendes Ortungsobjekt befindet (beispielsweise versehentliches Aufsetzen der Ortungsvorrichtung auf einen Balken hinter einer Wand). Folglich wird ein Wert C_{BG} des Koppelsignals, der für den Hintergrundabzug herangezogen wird, als besonders hoher Wert ermittelt. Die Detektion von ähnlichen Ortungsobjekten (d.h. ähnlicher Materialeigenschaft), deren induziertes Koppelsignal das so festgesetzte Hintergrundsignal nicht übersteigt, ist nicht möglich.

Durch Vergleichen weiterer, im Verlauf eines Ortungsvorgangs ermittelter Werte Cᵢ des Koppelsignals mit dem Wert C_{BG} des Koppelsignals für den Hintergrundabzug lässt sich dieser Zustand prinzipiell erkennen, so dass eine Neu-Kalibrierung initiiert werden kann oder der Benutzer der Ortungsvorrichtung aufgefordert werden kann, die Ortungsvorrichtung zur Durchführung einer erneuten Ermittlung eines Werts C_{BG} des Koppelsignals für den Hintergrundabzug an eine andere Stelle auf der Untersuchungsoberfläche aufzusetzen. Derartige Verfahren sind bereits aus dem Stand der Technik bekannt, beispielsweise aus US 5,619,128.

Wird die Neu-Kalibrierung automatisch durchgeführt, wie im Stand der Technik vorgeschlagen, so kann dies den Nachteil bewirken, dass durch unbeabsichtigtes Abheben der Ortungsvorrichtung - beispielsweise durch ein Verkippen der Ortungsvorrichtung auf der Untersuchungsoberfläche - oder durch Überfahren von Unebenheiten - beispielsweise das Überfahren von Fugen in einer Wand - ebenfalls eine Neu-Kalibrierung ausgelöst werden kann. Dadurch besteht jedoch das Risiko, dass ein deutlich zu niedriger Wert C_{BG} des Koppelsignals für den Hintergrundabzug ermittelt und angewendet wird. Folglich kann die Sensitivität der Ortungsvorrichtung zu hoch sein und die Ortungsvorrichtung zur "Überdetektion" neigen. Mit anderen Worten: es werden schon bei geringen Inhomogenitäten der Untersuchungsoberfläche Ortungsobjekte detektiert, obwohl sich tatsächlich keine Ortungsobjekte hinter oder in der Untersuchungsoberfläche befinden.

Das erfindungsgemäße Verfahren geht aus von einem Verfahren zur Ortung eines unter einer Untersuchungsoberfläche verborgenen Ortungsobjekts mit einer Ortungsvorrichtung, wobei zumindest ein von dem Ortungsobjekt abhängiges Koppelsignal mit einem Empfangsmittel der Ortungsvorrichtung empfangen wird.

Erfindungsgemäß wird, insbesondere nach Aufsetzen der Ortungsvorrichtung auf die Untersuchungsoberfläche, ein erster Wert C₁ des Koppelsignals erfasst und der erste Wert C₁ als Wert C_{BG} für einen Hintergrundabzug festgelegt, beispielsweise durch Gleichsetzen C_{BG} := C₁. Dabei wird, insbesondere während die Ortungsvorrichtung und die Untersuchungsoberfläche relativ zueinander bewegt werden, zumindest ein weiterer Wert Cᵢ des Koppelsignals (der Index i bezeichnet hier einen beliebigen weiteren Messwert des diskret oder kontinuierlich gemessenen Koppelsignals) erfasst und der Wert C_{BG} für den Hintergrundabzug durch den zumindest einen weiteren Wert Cᵢ neu kalibriert, beispielsweise durch Gleichsetzen C_{BG} := Cᵢ. Erfindungsgemäß wird der Wert C_{BG} für den Hintergrundabzug durch den zumindest einen weiteren Wert Cᵢ neu kalibriert, wenn der zumindest eine weitere Wert Cᵢ geringer ist als der Wert C_{BG} für den Hintergrundabzug, wobei der Wert abhängig von vorgewählten Kriterien als gültig erkannt wird.

Erfindungsgemäß wird die Neu-Kalibrierung fortan ausgesetzt, wenn ein gültiger Wert C_{BG} für den Hintergrundabzug erkannt wird.

Unter "relativ zueinander bewegen" ist insbesondere ein in beliebige Richtung durchgeführtes Verfahren, Bewegen, Verschieben, Rotieren, Drehen oder ein anderweitiges Ändern der Position und/oder der Ausrichtung der Ortungsvorrichtung in Bezug auf die Untersuchungsoberfläche zu verstehen. Alternativ oder zusätzlich kann natürlich auch die Untersuchungsoberfläche relativ zu der Ortungsvorrichtung bewegt werden - beispielsweise bei kleinen beweglichen Werkstücken.

Unter "kalibrieren" ist insbesondere zu verstehen, dass das Koppelsignal bezüglich eines Offsets (Offset-Werts) angepasst oder korrigiert wird. Insbesondere kann das Koppelsignal derart mit einem Offset beaufschlagt werden, dass eine Angleichung, Gleichsetzung oder eine anderweitige Anpassung des Koppelsignal erfolgt. In einer Ausführungsform stellt der Offset einen additiven Wert dar, in einem alternativen Ausführungsbeispiel stellt der Offset einen Faktor dar.

Erfindungsgemäß wird die Neu-Kalibrierung des Hintergrundsignals ausgesetzt, wenn ein gültiger Wert C_{BG} für den Hintergrundabzug erkannt wird, insbesondere mittels der Steuervorrichtung der Ortungsvorrichtung erkannt wird. Auf diese Weise kann eine fehlerhafte und zu sensitive Kalibrierung des Hintergrunds vermieden werden.

In einer Ausführungsform des Verfahrens wird ein gültiger Wert C_{BG} für den Hintergrundabzug erkannt, wenn detektiert wird, insbesondere mittels der Steuervorrichtung detektiert wird, dass zwischen Aufsetzen der Ortungsvorrichtung auf die Untersuchungsoberfläche und/oder Einschalten der Ortungsvorrichtung und/oder Erfassen des ersten Werts C₁ eine vorgegebene Zeit vergangen ist.

Auf diese Weise kann eine besonders einfache Realisierung des erfindungsgemäßen Verfahrens angegeben werden. Insbesondere ist die vorgegebene Zeit geräteintern vorgegeben und/oder durch einen Benutzer der Ortungsvorrichtung einstellbar. Der Verwendung einer vorgegebenen Zeit liegt insbesondere die Erkenntnis zu Grunde, dass ein Benutzer die Ortungsvorrichtung innerhalb dieser vorgegebenen Zeit typischerweise relativ zur Untersuchungsoberfläche bewegt hat, sodass bereits ein Vergleichen weiterer, im Verlauf des Ortungsvorgangs ermittelter Werte Cᵢ des Koppelsignals mit dem Wert C_{BG} des Koppelsignals für den Hintergrundabzug erfolgen und eine gegebenenfalls notwendige Neu-Kalibrierung initiiert werden konnte. Die vorgegebene Zeit kann vorteilhaft derart gewählt sein, dass sie an eine typische Bewegungsgeschwindigkeit der Ortungsvorrichtung relativ zur Untersuchungsoberfläche durch einen Benutzer angepasst ist. Insbesondere kann die vorgegebene Zeit derart gewählt sein, dass sie einer typischen Bewegungsdauer entspricht, die benötigt wird, um die Ortungsvorrichtung über ein Ortungsobjekt einer definierten Breite zu bewegen. Die Breite kann dabei beispielsweise zu zumindest 5 cm, bevorzugt zu zumindest 10 cm, besonders bevorzugt zu zumindest 15 cm gewählt sein. In einem Ausführungsbeispiel beträgt die vorgegebene Zeit zumindest 5 Sekunden. Alternativ beträgt die vorgegebene Zeit zumindest 10 Sekunden. Wiederum alternativ beträgt die vorgegebene Zeit zumindest 15 Sekunden.

In einer Ausführungsform des Verfahrens wird ein gültiger Wert C_{BG} für den Hintergrundabzug erkannt, wenn detektiert wird, dass die Ortungsvorrichtung und die Untersuchungsoberfläche relativ zueinander bewegt wurden, insbesondere um eine vorgegebene Entfernung zueinander bewegt wurden. Der Verwendung einer vorgegebenen Entfernung liegt insbesondere die Erkenntnis zu Grunde, dass innerhalb dieser vorgegebenen Entfernung bereits ein Vergleichen weiterer, im Verlauf des Ortungsvorgangs ermittelter Koppelsignale mit dem Wert C_{BG} des Koppelsignals für den Hintergrundabzug erfolgen und eine gegebenenfalls notwendige Neu-Kalibrierung initiiert werden konnte. Die vorgegebene Entfernung kann insbesondere größer als eine typische Breite eines Ortungsobjekts gewählt sein. In einer Ausführungsform des Verfahrens wird ein gültiger Wert C_{BG} für den Hintergrundabzug erkannt, wenn detektiert wird, dass die Ortungsvorrichtung und die Untersuchungsoberfläche insbesondere um zumindest 5 cm, bevorzugt um zumindest 10 cm, besonders bevorzugt um zumindest 15 cm relativ zueinander bewegt wurden.

Auf diese Weise kann eine besonders zuverlässige Erkennung eines gültigen Werts C_{BG} realisiert werden. Die Bewegung um eine vorgegebene Entfernung kann beispielsweise mittels eines Positionssensors der Ortungsvorrichtung detektiert werden. Der Positionssensor dient dabei der Erfassung von Positionsdaten der Ortungsvorrichtung bezogen auf die Untersuchungsoberfläche. Unter einem Positionssensor ist insbesondere ein Sensor zu verstehen, der dazu vorgesehen ist, eine Feldänderung, eine Laufzeitänderung und/oder eine Phasenlage in ein elektrisch auswertbares Signal umzuwandeln und eine gegenwärtige Position des Positionssensors auf der Untersuchungsoberfläche auszugeben oder zu übermitteln. Die gegenwärtige Position kann dabei relativ zu einer früheren Position oder absolut, insbesondere bezogen auf zumindest einen festen Bezugspunkt, erfasst und als Positionsdaten ausgegeben oder übermittelt werden. Die Positionsdaten betreffen zumindest Koordinaten in zumindest eine Richtung, die die Position des Positionssensors auf der Untersuchungsoberfläche bestimmen. Unter einem Bezugspunkt soll ein relativ zur Untersuchungsoberfläche fest angeordneter Punkt verstanden werden, beispielsweise ein markanter Punkt der Untersuchungsoberfläche. Weiter ist es denkbar, dass der Positionssensor zu einer Positionsbestimmung mittels einer externen Referenz, beispielsweise stationären Sendern und/oder Satelliten, vorgesehen ist. Alternativ ist ferner denkbar, dass der Positionssensor dazu vorgesehen ist, für einen Ortungsvorgang Positionsdaten unabhängig von einem Bezugspunkt auf der Untersuchungsfläche rein relativ zu erfassen. Der Positionssensor kann beispielsweise als ein optischer oder mechanischer Wegstreckensensor ausgebildet sein, welcher in einem Betriebszustand eine Bewegung der Ortungsvorrichtung auf der Untersuchungsoberfläche erfasst. In einer Ausführungsform ist der Positionssensor als optischer Wegaufnehmer realisiert. Insbesondere ist der optische Wegaufnehmer in der bei Anwendung der Ortungsvorrichtung der Untersuchungsoberfläche zugewandten Gehäuseseite der Ortungsvorrichtung angeordnet. In einer alternativen oder zusätzlichen Ausführungsform des Positionssensors kann dieser in Form von Rädern realisiert sein, deren Drehung erfasst und daraus eine zurückgelegte Entfernung (mittels Odometrie) ermittelt werden kann.

In einer Ausführungsform des Verfahrens wird ein gültiger Wert C_{BG} für den Hintergrundabzug erkannt, wenn detektiert wird, dass eine Differenz zwischen einem ermittelten maximalen Wert Cₘₐₓ des Koppelsignals und einem ermittelten minimalen Wert Cₘᵢₙ des Koppelsignals größer als ein Schwellwert Cₛ ist (Cₘₐₓ - Cₘᵢₙ > Cₛ). In einer Ausführungsform des Verfahrens kann der maximale Wert Cₘₐₓ des Koppelsignals über eine vorgegebene Dauer oder über eine vorgegebene Anzahl von Abtastwerten ermittelt werden. Alternativ oder zusätzlich kann in einer Ausführungsform des Verfahrens der minimale Wert Cₘᵢₙ des Koppelsignals über eine vorgegebene Dauer oder über eine vorgegebene Anzahl von Abtastwerten ermittelt werden. Insbesondere können die Anzahl und/oder die Dauern identisch sein. Insbesondere können die Werte Cₘₐₓ und Cₘᵢₙ ab Einschalten oder ab Aufsetzen der Ortungsvorrichtung auf eine Untersuchungsoberfläche ermittelt werden. Auf diese Weise kann besonders einfach sichergestellt werden, dass die Ortungsvorrichtung tatsächlich relativ zur Untersuchungsoberfläche bewegt worden ist, sodass bereits ein Vergleichen weiterer, im Verlauf des Ortungsvorgangs ermittelter Werte Cᵢ des Koppelsignals mit dem Wert C_{BG} des Koppelsignals für den Hintergrundabzug erfolgen und eine gegebenenfalls notwendige Neu-Kalibrierung initiiert werden konnte. Beispielsweise kann der Schwellwert Cₛ durch 100fF oder 80fF oder 60fF definiert sein.

In einer Ausführungsform des Verfahrens wird ein gültiger Wert C_{BG} für den Hintergrundabzug erkannt, wenn detektiert wird, dass eine Differenz zwischen einem, insbesondere in einem über eine vorgegebene Dauer oder über eine vorgegebene Anzahl von Abtastwerten, ermittelten maximalen Wert Cₘₐₓ des Koppelsignals und dem Wert C_{BG} für den Hintergrundabzug größer als ein Schwellwert Cₛ ist (Cₘₐₓ - C_{BG} > Cₛ). Auf diese Weise kann besonders einfach sichergestellt werden, dass die Ortungsvorrichtung tatsächlich relativ zur Untersuchungsoberfläche bewegt worden ist, sodass bereits ein Vergleichen weiterer, im Verlauf des Ortungsvorgangs ermittelter Werte Cᵢ des Koppelsignals mit dem Wert C_{BG} des Koppelsignals für den Hintergrundabzug erfolgen und eine Neu-Kalibrierung initiiert werden konnte. Ferner kann derart sichergestellt werden, dass der für die Bestimmung des Hintergrunds verwendete Wert C_{BG} des Koppelsignals nicht einem maximalen Wert entspricht, wie er typischerweise dann vorliegt, wenn ein Ortungsobjekt detektiert wird. In einer Ausführungsform gleicht der Schwellwert Cₛ einem Schwellwert für das Erkennen eines Ortungsobjekts. Dadurch kann sichergestellt werden, dass der Hintergrundabzug so gewählt ist, dass ein Ortungsobjekt auch detektiert werden kann. Beispielsweise kann der Schwellwert Cₛ durch 100fF oder 80fF oder 60fF definiert sein.

In einer Ausführungsform des Verfahrens wird ein gültiger Wert C_{BG} für den Hintergrundabzug erkannt, wenn detektiert wird, dass der zumindest eine weitere Wert Cᵢ des Koppelsignals um einen vorgegebenen Wert größer ist als der Wert C_{BG} für den Hintergrundabzug. Insbesondere kann der vorgegebene Wert dabei einen Faktor oder einen Schwellwert darstellen. Somit kann sichergestellt werden, dass die Ortungsvorrichtung auf ein Ortungsobjekt zu bewegt wird.

In einer Ausführungsform des Verfahrens wird mittels einer Ausgabevorrichtung der Ortungsvorrichtung eine Information ausgegeben, wenn ein gültiger Wert C_{BG} für den Hintergrundabzug erkannt worden ist und ein weiterer Wert Cᵢ des Koppelsignals kleiner ist als der Wert C_{BG} für den Hintergrundabzug, insbesondere um zumindest 0,15 %, bevorzugt um 0,3 %, besonders bevorzugt um 0,5 %, kleiner ist als der Wert C_{BG} für den Hintergrundabzug. Auf diese Weise kann eine unerwartete Änderung, insbesondere ein unerwartetes Absinken, des Koppelsignals - beispielsweise in Folge eines Verkippens der Ortungsvorrichtung auf der Untersuchungsoberfläche oder in Folge eines Überfahrens von Unebenheiten in der Untersuchungsoberfläche - an einen Benutzer der Ortungsvorrichtung als Hinweis ausgegeben werden. Eine Anwenderfreundlichkeit der Ortungsvorrichtung kann vorteilhaft erhöht werden, da mittels der Ortungsvorrichtung eine unmittelbare Rückmeldung über eine Qualität der durchgeführten Messung an den Benutzer der Ortungsvorrichtung erfolgen kann.

In einer Ausführungsform des Verfahrens wird das Koppelsignal zur Bestimmung eines Werts Cᵢ des Koppelsignals über eine vorgegebene Dauer oder über eine vorgegebene Anzahl von Werten modelliert, insbesondere interpoliert und/oder extrapoliert, und/oder gefiltert und/oder gemittelt. Derart kann sichergestellt werden, dass eine besonders präzise Bestimmung eines aktuellen Werts Cᵢ des Koppelsignals möglich ist. Ferner können Schwankungen des Koppelsignals, insbesondere Ausreißer und Messfehler, vorteilhaft bei einer Modellierung, insbesondere bei einer Interpolation und/oder Extrapolation, nicht berücksichtigt werden und somit das Verfahren hinsichtlich einer Präzision verbessert werden.

In einer Ausführungsform des Verfahrens wird das Verfahren wiederholt, insbesondere kontinuierlich, durchgeführt.

Es sei abschließend angemerkt, dass das erfindungsgemäße Verfahren auch eine Ausführungsform einer Ortungsvorrichtung mit zwei oder mehr Empfangsmitteln umfasst. Dabei ist das Verfahren unmittelbar auf die Koppelsignale der weiteren Empfangsmittel übertragbar.

Ferner betrifft die Erfindung eine Ortungsvorrichtung zur Ortung eines unter einer Untersuchungsoberfläche verborgenen Ortungsobjekts, zumindest aufweisend ein Empfangsmittel, das dazu vorgesehen ist, ein Koppelsignal von dem Ortungsobjekt zu empfangen, und eine Steuervorrichtung, die dazu vorgesehen ist, das erfindungsgemäße Verfahren zur Ortung durchzuführen.

Ferner sei noch angemerkt, dass die Bestimmung eines Maximums (beispielsweise Cₘₐₓ) oder eines Minimums oder dergleichen keine Einschränkung auf einen exakten Wert implizieren soll - alternativ kann auch beispielsweise ein zweitgrößter Wert oder ein Mittelwert über beispielsweise die drei höchsten (niedrigsten) Werte oder desgleichen verwendet werden. Die der Erfindung zu Grunde liegende Lehre ändert sich dadurch nicht.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Ansicht einer erfindungsgemäßen Ortungsvorrichtung, aufgesetzt auf eine Untersuchungsoberfläche;
- Figur 2: eine schematische Draufsicht auf eine Ausgestaltung der erfindungsgemäßen Ortungsvorrichtung samt geräteinterner Komponenten;
- Figur 3: ein Blockschaltbild einer exemplarischen Messelektronik einer erfindungsgemäßen Ortungsvorrichtung;
- Figur 4: ein Verfahrensdiagramm einer Ausführungsform des erfindungsgemäßen Verfahrens.

### Beschreibung der Ausführungsbeispiele

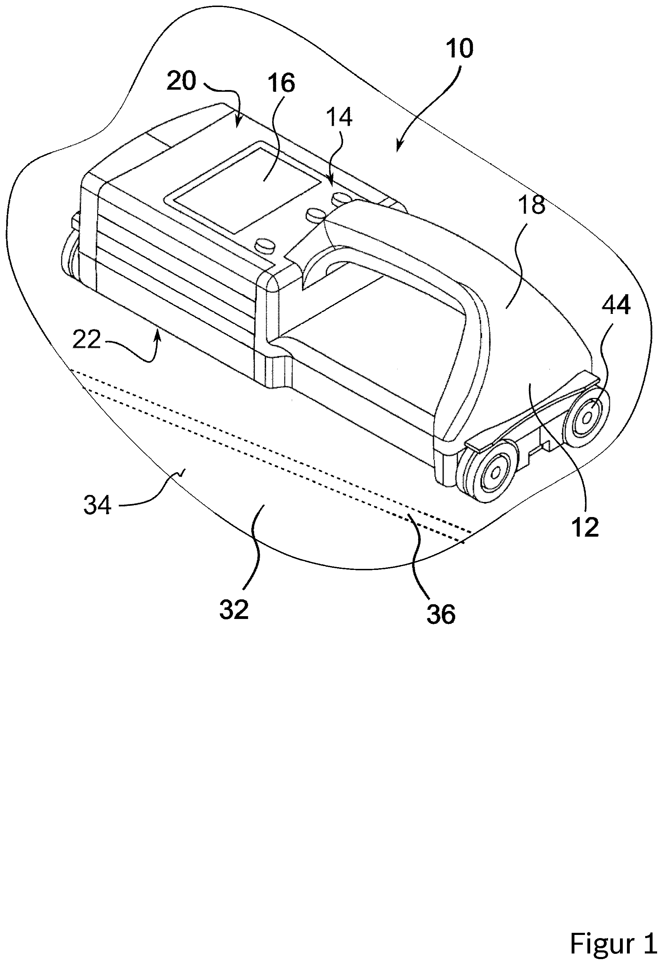

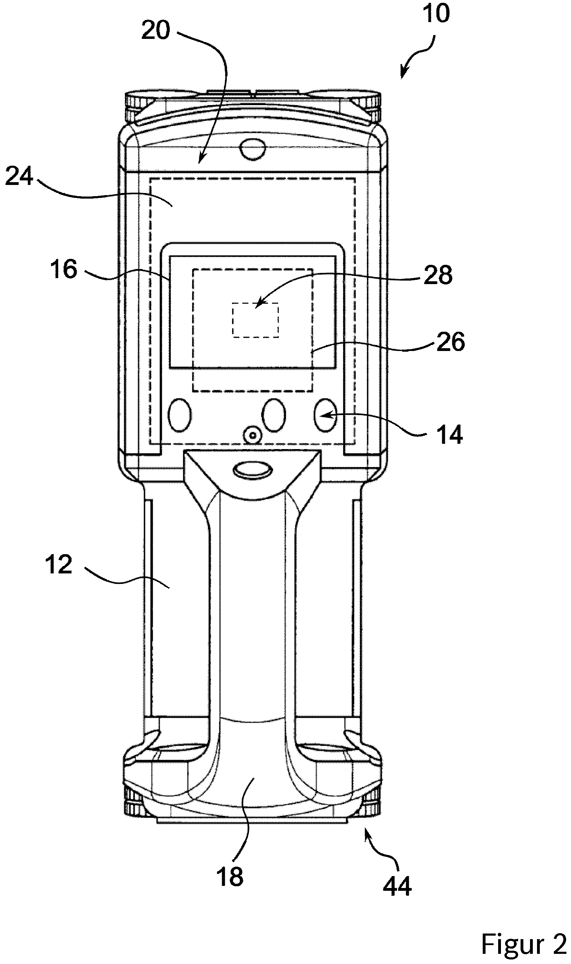

Figur 1 und Figur 2 zeigen ein Ausführungsbeispiel der erfindungsgemäßen Ortungsvorrichtung 10 in einer perspektivischen Ansicht sowie in einer Aufsicht. Die beispielhaft ausgeführte Ortungsvorrichtung 10 weist ein Gehäuse 12, eine Eingabevorrichtung in Form von Betätigungselementen 14, geeignet zum Ein- und Ausschalten der Ortungsvorrichtung 10, zum Starten und Konfigurieren eines Messvorgangs und zum Eingeben von Arbeitsparametern, sowie eine Ausgabevorrichtung 16 zur Ausgabe von Arbeitsparametern und/oder Auswerteergebnissen in Form eines Bildschirms auf. Die Ortungsvorrichtung 10 verfügt zum Transport und zu dessen Führung über einen Handgriff 18. Der Handgriff 18, die Betätigungselemente 14 sowie der Bildschirm befinden sich auf einer ersten Gehäuseseite 20 der Ortungsvorrichtung 10, die bei einer Bedienung der Ortungsvorrichtung 10 typischerweise dem Anwender zugewandt ist.

Auf einem Trägerelement 24 (vgl. Figur 2), insbesondere einer Systemplatine oder Leiterplatte innerhalb des Gehäuses 12, sind weitere Komponenten der Ortungsvorrichtung, insbesondere ein Empfangsmittel 28 und eine Steuervorrichtung 26, insbesondere zur Auswertung von von dem Empfangsmittel 28 erfassten Koppelsignalen untergebracht. Die Komponenten der Ortungsvorrichtung 10 sind miteinander signaltechnisch verbunden. Die Steuervorrichtung 26 weist eine Steuerelektronik, umfassend Mittel zur Kommunikation mit den anderen Komponenten der Ortungsvorrichtung 10, auf. Die Steuervorrichtung 26 umfasst insbesondere eine Einheit mit einer Prozessoreinheit, einer Speichereinheit und einem in der Speichereinheit gespeicherten Betriebsprogramm. Die Steuervorrichtung 26 weist ferner das erfindungsgemäße Verfahren in seinem Speicher auf und ist zu dessen Durchführung eingerichtet.

Zur Messung eines Koppelsignals, insbesondere zur Detektion eines unter einer Untersuchungsoberfläche 34 eines Werkstücks 32 verborgenen Ortungsobjekts 36, wird die Ortungsvorrichtung 10 mit seiner zweiten Gehäuseseite 22, d.h. der Geräterückseite, flächig in unmittelbarer Nähe zu dem Werkstück 32, insbesondere in Berührung zu dessen Untersuchungsoberfläche 34, positioniert. Dabei dringen Koppelsignale (hier nicht näher dargestellt), insbesondere kapazitive Koppelsignale, von dem Ortungsobjekt 36 durch die zweite Gehäuseseite 22 bis zu dem Empfangsmittel 28. Ein mittels des Empfangsmittels 28 empfangenes Koppelsignal wird an die Steuervorrichtung 26 weitergeleitet, insbesondere in Form einer Spannung und/oder eines Stroms weitergeleitet, von der es mittels Auswerteroutinen ausgewertet und aufbereitet wird und an eine Ausgabevorrichtung 16 weitergeleitet wird. Das ausgewertete Messergebnis, insbesondere eine Detektion eines Ortungsobjekts 36, wird dem Benutzer auf dem Bildschirm dargestellt und/oder kann über eine Datenkommunikationsschnittstelle der Ortungsvorrichtung 10 an ein weiteres Datenverarbeitungsgerät gesendet werden.

Ferner weist die Ortungsvorrichtung Räder 44 auf, die der Erfassung einer Bewegung der Ortungsvorrichtung 10 relativ zur Untersuchungsoberfläche 34 dienen. Die Räder 44 sind geräteintern mit einem Sensor verbunden, der aus einer Drehung der Räder 44 eine zurückgelegte Entfernung der Ortungsvorrichtung 10 bezogen auf die Untersuchungsoberfläche 34 bestimmt.

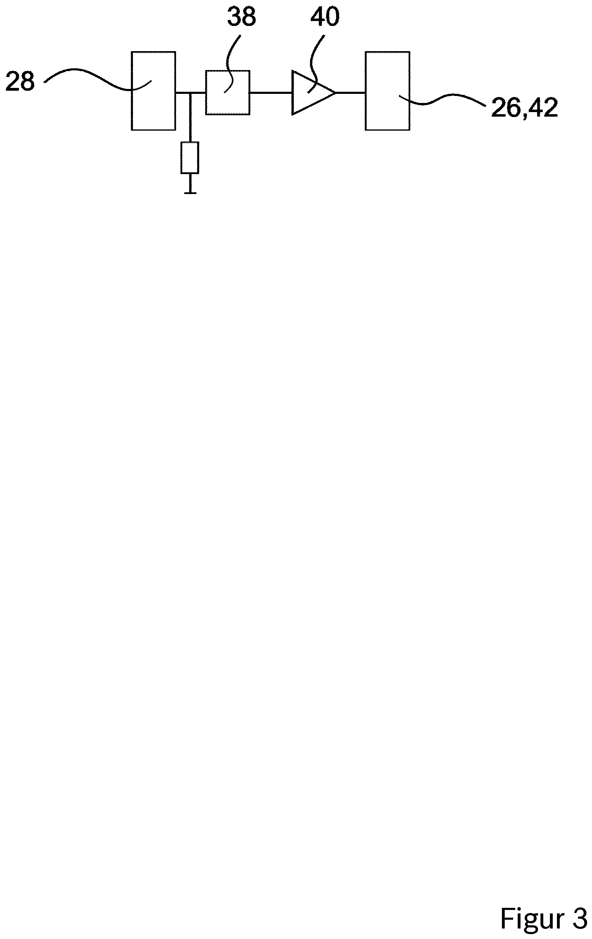

Figur 3 zeigt ein Blockschaltbild einer beispielhaft ausgeführten Messelektronik einer Ortungsvorrichtung 10, wie sie in Figur 1 dargestellt ist. Ein Empfangsmittel 28 ist über einen Bandpassfilter 38 und einen nachgeschalteten Impedanzwandler 40 samt Verstärkerstufe mit der Steuervorrichtung 26 verbunden. Die Steuervorrichtung 26 umfasst insbesondere einen Mikrocontroller 42 mit einem Analog-Digitalwandler (ADC). Von dem Empfangsmittel 28 werden dabei Ausgangssignale - entsprechend hier in elektrische Koppelsignale gewandelte kapazitive Koppelsignale von dem Ortungsobjekt 36 - ausgegeben. Aus diesen Koppelsignalen werden im Mikrocontroller 42 anschließend Amplitudenwerte, insbesondere Werte Cᵢ von Kapazitäten bestimmt. Die dargestellte Messelektronik stellt insbesondere eine Messelektronik einer passiven Ortungsvorrichtung 10 zur Ortung von unter der Untersuchungsoberfläche 34 verborgenen spannungsführenden Leitungen dar, wobei die Ortungsvorrichtung 10 selbst kein Ortungssignal emittiert.

In einem alternativen Ausführungsbeispiel kann die Messelektronik auch der Erzeugung eines Ortungssignals, welches in ein Werkstück 32 emittiert, von einem Ortungsobjekt 36 reflektiert sowie von der Messelektronik empfangen und ausgewertet wird, dienen. Insbesondere stellt die Messelektronik dann eine Messelektronik einer aktiven Ortungsvorrichtung 10 dar, die beispielsweise der induktiven Ortung von metallischen Ortungsobjekten 36 dient.

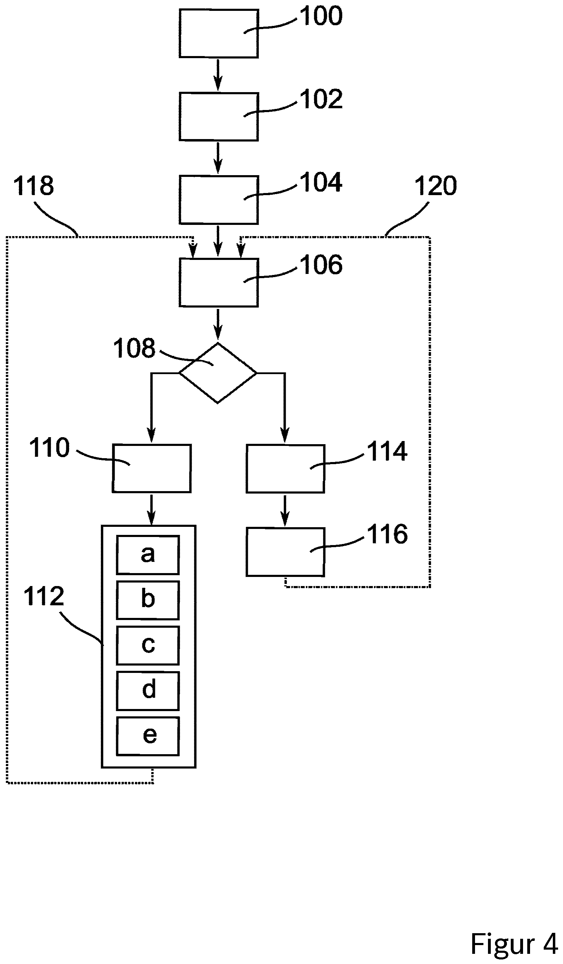

Figur 4 zeigt ein Verfahrensdiagramm einer Ausführungsform des erfindungsgemäßen Verfahrens zur Ortung eines unter der Untersuchungsoberfläche 34 verborgenen Ortungsobjekts 36 mittels einer Ortungsvorrichtung 10.

Dabei wird in Verfahrensschritt 100 die Ortungsvorrichtung 10 auf eine Untersuchungsoberfläche 34 eines Werkstücks 32 aufgesetzt. In Verfahrensschritt 102 wird unter Verwendung des Empfangsmittels 28 ein Koppelsignal, hier insbesondere ein kapazitives Koppelsignal zwischen Werkstück 32 und Empfangsmittel 28, erfasst und daraus ein erster Wert C₁ bestimmt. Dieser Wert C₁ wird in Verfahrensschritt 104 als Wert C_{BG} für den Hintergrundabzug der Ortungsvorrichtung 10 gesetzt. Fortan werden alle erfassten Koppelsignale um diesen Wert C_{BG} verringert. In Verfahrensschritt 106 wird, insbesondere während die Ortungsvorrichtung 10 durch einen Benutzer relativ zur Untersuchungsoberfläche 34 bewegt wird, zumindest ein weiterer Wert Cᵢ des Koppelsignals ermittelt. Ist dieser weitere Wert Cᵢ geringer ist als der in Verfahrensschritt 104 gesetzte Wert C_{BG} für den Hintergrundabzug (beispielsweise um einen Schwellwert oder einen Schwellfaktor geringer), so wird der Wert C_{BG} für den Hintergrundabzug durch den zumindest einen weiteren Wert Cᵢ in Verfahrensschritt 110 neu kalibriert, d.h. neu gesetzt, bis eine Neu-Kalibrierung verfahrensgemäß ausgesetzt wird. Ob eine Aussetzung der Neu-Kalibrierung stattgefunden hat, wird in Verfahrensschritt 108 geprüft.

In Verfahrensschritt 112 werden Kriterien geprüft, die der Erkennung eines gültigen Werts C_{BG} für den Hintergrundabzug dienen. Die Kriterien sind als 5 unabhängige Bedingungen a bis e implementiert:
a. es wird mittels der Steuervorrichtung 26 detektiert, dass nach Aufsetzen der Ortungsvorrichtung 10 auf die Untersuchungsoberfläche 34 oder nach Einschalten der Ortungsvorrichtung 10 oder nach Erfassen des ersten Werts C₁ eine vorgegebene Zeit vergangen ist; die vorgegebene Zeit beträgt beispielsweise 5 Sekunden (in einem alternativen Ausführungsbeispiel kann das Messen einer vorgegebene Zeit auch erst nach Erfüllung zumindest einer der anderen Bedingungen b bis e initiiert werden);
b. es wird unter Verwendung der Räder 44 und mittels der Steuervorrichtung 26 detektiert, dass die Ortungsvorrichtung 10 und die Untersuchungsoberfläche 34 relativ zueinander bewegt wurden, insbesondere um zumindest 10 cm zueinander bewegt wurden;
c. es wird mittels der Steuervorrichtung 26 detektiert, dass eine Differenz zwischen einem ermittelten maximalen Wert Cₘₐₓ des Koppelsignals und einem ermittelten minimalen Wert Cₘᵢₙ des Koppelsignals größer als ein Schwellwert Cₛ ist; Cₛ beträgt beispielsweise 80 fF (Femtofarad);
d. es wird mittels der Steuervorrichtung 26 detektiert, dass eine Differenz zwischen einem ermittelten maximalen Wert Cₘₐₓ des Koppelsignals und dem Wert C_{BG} für den Hintergrundabzug größer als ein Schwellwert Cₛ ist, wobei der Schwellwert Cₛ einem Schwellwert für das Erkennen eines Ortungsobjekts gleicht; Cₛ beträgt beispielsweise 80 fF (Femtofarad);
e. es wird unter mittels der Steuervorrichtung 26 detektiert, dass der Wert Cᵢ des Koppelsignals um einen vorgegebenen Wert größer ist als der Wert C_{BG} für den Hintergrundabzug.

Ist keines der Kriterien a bis e erfüllt, so beginnt das Verfahren wieder bei Verfahrensschritt 106 - dargestellt durch die Wiederholungsschleife 118 (gepunktete Linie) - und wiederholt die Verfahrensschritte 106, 108, 110 und 112. Ist mindestens ein Kriterium a bis e erfüllt, so wird die Wiederholungsschleife 118 der Neu-Kalibrierung ausgesetzt, sodass bei einem erneuten Durchlauf des Verfahrens ab Verfahrensschritt 106 in eine weitere Wiederholungsschleife 120 eingetreten wird, in der die Verfahrensschritte 106, 108, 114 und 116 wiederholt ablaufen.

In Verfahrensschritt 114 wird mittels der Ausgabevorrichtung 16 der Ortungsvorrichtung 10 eine Information, insbesondere eine Warnung, ausgegeben, wenn ein gültiger Wert C_{BG} für den Hintergrundabzug in Verfahrensschritt 108 erkannt wurde und ein weiterer Wert Cᵢ des Koppelsignals kleiner ist als der Wert C_{BG} für den Hintergrundabzug, insbesondere um zumindest 0,3 % kleiner ist als der Wert C_{BG} für den Hintergrundabzug. Ferner wird in Verfahrensschritt 116 eine Information ausgegeben, wenn ein Ortungsobjekt 36 detektiert wird.

Die Verfahrensschritte 106, 108, 114 und 116 (in Abhängigkeit des Bedieners natürlich auch das Bewegen der Ortungsvorrichtung 10 in Verfahrensschritt 106) werden wiederholt und insbesondere kontinuierlich oder zumindest quasikontinuierlich durchgeführt. Die Wiederholung dieser Verfahrensschritte wird durch die Wiederholungsschleife 120 angedeutet (Strich-Punkt-Linie).

Es sei noch erwähnt, dass in einem alternativen Ausführungsbeispiel des Verfahrens eine andere Kombination der Kriterien implementiert sein kann, beispielsweise basierend auf den Kriterien a, c, d und e (wenn die Ortungsvorrichtung beispielsweise keinen Positionssensor aufweist).

## Patentansprüche

1. Verfahren zur Ortung eines unter einer Untersuchungsoberfläche (34) verborgenen Ortungsobjekts (36) mit einer Ortungsvorrichtung (10), wobei zumindest ein von dem Ortungsobjekt (36) abhängiges Koppelsignal mit einem Empfangsmittel (28) der Ortungsvorrichtung (10) empfangen wird,
• wobei ein erster Wert C₁ des Koppelsignals erfasst wird und der erste Wert Cᵢ als Wert C_{BG} für einen Hintergrundabzug festgelegt wird;
• wobei zumindest ein weiterer Wert Cᵢ des Koppelsignals erfasst wird und der Wert C_{BG} für den Hintergrundabzug durch den zumindest einen weiteren Wert Cᵢ neu kalibriert wird, wenn der zumindest eine weitere Wert Cᵢ geringer ist als der Wert C_{BG} für den Hintergrundabzug;
• wobei der Wert abhängig von vorgewählten Kriterien als gültig erkannt wird;
**dadurch gekennzeichnet, dass** die Neu-Kalibrierung fortan ausgesetzt wird, wenn ein gültiger Wert C_{BG} für den Hintergrundabzug erkannt wird.

2. Verfahren nach Anspruch **1, dadurch gekennzeichnet, dass** ein gültiger Wert C_{BG} für den Hintergrundabzug erkannt wird, wenn detektiert wird, dass nach Aufsetzen der Ortungsvorrichtung (10) auf die Untersuchungsoberfläche (34) und/oder nach Einschalten der Ortungsvorrichtung (10) und/oder nach Erfassen des ersten Werts C₁ eine vorgegebene Zeit vergangen ist.

3. Verfahren nach einem der vorhergehenden Ansprüche, **dadurch gekennzeichnet, dass** ein gültiger Wert C_{BG} für den Hintergrundabzug erkannt wird, wenn detektiert wird, dass die Ortungsvorrichtung (10) und die Untersuchungsoberfläche (34) relativ zueinander bewegt wurden, insbesondere um zumindest 10 cm, bevorzugt um zumindest 15 cm, besonders bevorzugt um zumindest 20 cm relativ zueinander bewegt wurden.

4. Verfahren nach einem der vorhergehenden Ansprüche, **dadurch gekennzeichnet, dass** ein gültiger Wert C_{BG} für den Hintergrundabzug erkannt wird, wenn detektiert wird, dass eine Differenz zwischen einem ermittelten maximalen Wert Cₘₐₓ des Koppelsignals und einem ermittelten minimalen Wert Cₘᵢₙ des Koppelsignals größer als ein Schwellwert Cₛ ist.

5. Verfahren nach einem der vorhergehenden Ansprüche, **dadurch gekennzeichnet, dass** ein gültiger Wert C_{BG} für den Hintergrundabzug erkannt wird, wenn detektiert wird, dass eine Differenz zwischen einem ermittelten maximalen Wert Cₘₐₓ des Koppelsignals und dem Wert C_{BG} für den Hintergrundabzug größer als ein Schwellwert Cₛ ist.

6. Verfahren nach Anspruch 4 oder 5, **dadurch gekennzeichnet, dass** der Schwellwert Cₛ einem Schwellwert für das Erkennen eines Ortungsobjekts (36) gleicht.

7. Verfahren nach einem der vorhergehenden Ansprüche, **dadurch gekennzeichnet, dass** ein gültiger Wert C_{BG} für den Hintergrundabzug erkannt wird, wenn detektiert wird, dass der zumindest eine weitere Wert Cᵢ des Koppelsignals um einen vorgegebenen Wert größer ist als der Wert C_{BG} für den Hintergrundabzug.

8. Verfahren nach einem der vorhergehenden Ansprüche, **dadurch gekennzeichnet, dass** mittels einer Ausgabevorrichtung (16) der Ortungsvorrichtung (10) eine Information ausgegeben wird, wenn ein gültiger Wert C_{BG} für den Hintergrundabzug erkannt wird und ein weiterer Wert Cᵢ des Koppelsignals kleiner ist als der Wert C_{BG} für den Hintergrundabzug, insbesondere um zumindest 0,15 %, bevorzugt um 0,3 %, besonders bevorzugt um 0,5 %, kleiner ist als der Wert C_{BG} für den Hintergrundabzug.

9. Ortungsvorrichtung (10) zur Ortung eines unter einer Untersuchungsoberfläche (34) verborgenen Ortungsobjekts (36), zumindest aufweisend ein Empfangsmittel (28), das dazu vorgesehen ist, ein Koppelsignal von dem Ortungsobjekt (36) zu empfangen, und eine Steuervorrichtung (26), **dadurch gekennzeichnet, dass** die Steuervorrichtung (26) dazu vorgesehen ist, ein Verfahren zur Ortung gemäß einem der vorhergehenden Ansprüche durchzuführen.

## Claims

1. Method for locating a locatable object (36) hidden under a surface to be searched (34) by means of a locating device (10), wherein at least one coupling signal that is dependent on the locatable object (36) is received by a receiving means (28) of the locating device (10).
• wherein a first value C₁ of the coupling signal is acquired, and the first value Cᵢ is specified as the value C_{BG} for a background subtraction;
• wherein at least one further value Cᵢ of the coupling signal is acquired, and the value C_{BG} for the background subtraction is recalibrated by the at least one further value Cᵢ if the at least one further value Cᵢ is less than the value C_{BG} for the background subtraction;
• wherein the value is recognized as valid depending on preselected criteria;
**characterized in that** the re-calibration is then suspended when a valid value CBG is recognized for the background subtraction.

2. Method according to Claim 1, **characterized in that** a valid value C_{BG} for the background subtraction is recognized when it is detected that a predefined time has elapsed since placing the locating device (10) on the surface to be searched (34) and/or since switching the locating device (10) on and/or since acquiring the first value C₁.

3. Method according to one of the preceding claims, **characterized in that** a valid value C_{BG} for the background subtraction is recognized when it is detected that the locating device (10) and the surface to be searched (34) have been moved relative to one another, in particular by at least 10 cm, preferably by at least 15 cm, particularly preferably by at least 20 cm relative to one another.

4. Method according to one of the preceding claims, **characterized in that** a valid value C_{BG} for the background subtraction is recognized when it is detected that a difference between a determined maximum value Cₘₐₓ of the coupling signal and a determined minimum value Cₘᵢₙ of the coupling signal is greater than a threshold value Cₛ.

5. Method according to one of the preceding claims, **characterized in that** a valid value C_{BG} for the background subtraction is recognized when it is detected that a difference between a determined maximum value Cₘₐₓ of the coupling signal and the value C_{BG} for the background subtraction is greater than a threshold value Cₛ.

6. Method according to Claim 4 or 5, **characterized in that** the threshold value Cₛ is equal to a threshold value for the recognition of a locatable object (36).

7. Method according to one of the preceding claims, **characterized in that** a valid value C_{BG} for the background subtraction is recognized when it is detected that the at least one further value Cᵢ of the coupling signal is greater by a predefined value than the value C_{BG} for the background subtraction.

8. Method according to one of the preceding claims, **characterized in that** information is output by means of an output device (16) of the locating device (10) when a valid value C_{BG} for the background subtraction is recognized, and a further value Cᵢ of the coupling signal is less than the value C_{BG} for the background subtraction, in particular by at least 0.15%, preferably by 0.3%, particularly preferably by 0.5%, less than the value C_{BG} for the background subtraction.

9. Locating device (10) for locating a locatable object (36) hidden under a surface to be searched (34), comprising at least a receiving means (28), which is provided to receive a coupling signal from the locatable object (36), and a control device (26), **characterized in that** the control device (26) is provided to carry out a method for location according to one of the preceding claims.

## Revendications

1. Procédé permettant de localiser un objet à localiser (36) caché sous une surface d'examen (34), comprenant un dispositif de localisation (10), dans lequel au moins un signal de couplage dépendant de l'objet à localiser (36) est reçu par un moyen de réception (28) du dispositif de localisation (10),
• dans lequel une première valeur Cᵢ du signal de couplage est détectée, et la première valeur Cᵢ est définie comme une valeur C_{BG} pour une soustraction d'arrière-plan ;
• dans lequel au moins une valeur C₁ supplémentaire du signal de couplage est détectée, et la valeur C_{BG} pour la soustraction d'arrière-plan est ré-étalonnée par ladite au moins une valeur C₁ supplémentaire lorsque ladite au moins une valeur C₁ supplémentaire est inférieure à la valeur C_{BG} pour la soustraction d'arrière-plan ;
• dans lequel la valeur est reconnue comme étant valable en fonction de critères présélectionnés ;
**caractérisé en ce que** le ré-étalonnage est désormais omis lorsqu'une valeur C_{BG} valable est reconnue pour la soustraction d'arrière-plan.

2. Procédé selon la revendication 1, **caractérisé en ce qu'**une valeur C_{BG} valable est reconnue pour la soustraction d'arrière-plan lorsqu'il est détecté qu'un délai prédéfini s'est écoulé après la mise en place du dispositif de localisation (10) sur la surface d'examen (34) et/ou après la mise sous tension du dispositif de localisation (10) et/ou après la détection de la première valeur C₁.

3. Procédé selon l'une quelconque des revendications précédentes, **caractérisé en ce qu'**une valeur C_{BG} valable pour la soustraction d'arrière-plan est reconnue lorsqu'il est détecté que le dispositif de localisation (10) et la surface d'examen (34) ont été déplacés l'un par rapport à l'autre, en particulier déplacés l'un par rapport à l'autre d'au moins 10 cm, de préférence d'au moins 15 cm, de manière particulièrement préférée d'au moins 20 cm.

4. Procédé selon l'une quelconque des revendications précédentes, **caractérisé en ce qu'**une valeur C_{BG} valable pour la soustraction d'arrière-plan est reconnue lorsqu'il est détecté qu'une différence entre une valeur maximale Cₘₐₓ établie du signal de couplage et une valeur minimale Cₘᵢₙ établie du signal de couplage est supérieure à une valeur seuil Cₛ.

5. Procédé selon l'une quelconque des revendications précédentes, **caractérisé en ce qu'**une valeur C_{BG} valable pour la soustraction d'arrière-plan est reconnue lorsqu'il est détecté qu'une différence entre une valeur maximale Cₘₐₓ établie du signal de couplage et la valeur C_{BG} pour la soustraction d'arrière-plan est supérieure à une valeur seuil Cₛ.

6. Procédé selon la revendication 4 ou 5, **caractérisé en ce que** la valeur seuil Cₛ est égale à une valeur seuil pour reconnaître un objet à localiser (36).

7. Procédé selon l'une quelconque des revendications précédentes, **caractérisé en ce qu'**une valeur C_{BG} valable pour la soustraction d'arrière-plan est reconnue lorsqu'il est détecté que ladite au moins une valeur C₁ supplémentaire du signal de couplage est supérieure d'une valeur prédéfinie à la valeur C_{BG} pour la soustraction d'arrière-plan.

8. Procédé selon l'une quelconque des revendications précédentes, **caractérisé en ce qu'**au moyen d'un dispositif de sortie (16) du dispositif de localisation (10) une information est émise lorsqu'une valeur C_{BG} valable pour la soustraction d'arrière-plan est détectée et une valeur C₁ supplémentaire du signal de couplage est inférieure à la valeur C_{BG} pour la soustraction d'arrière-plan, en particulier d'au moins 0,15 %, de préférence de 0,3 %, de manière particulièrement préférée inférieure de 0,5 % à la valeur C_{BG} pour la soustraction d'arrière-plan.

9. Dispositif de localisation (10) permettant de localiser un objet à localiser (36) caché sous une surface d'examen (34), présentant au moins un moyen de réception (28) qui est prévu pour recevoir un signal de couplage de l'objet de localisation (36), et un dispositif de commande (26), **caractérisé en ce que** le dispositif de commande (26) est conçu pour exécuter un procédé de localisation selon l'une quelconque des revendications précédentes.
